# EUROPÄISCHE PATENTANMELDUNG

(11) **EP 0 967 247 A1**
(43) Veröffentlichungstag der Anmeldung: **29.12.1999**
(21) Anmeldenummer: 99112033.8
(22) Anmeldetag: 22.06.1999
(51) Int. Cl.: C08L 3/02, C08L 91/00, C08B 31/00

(54) **Verfahren zur Herstellung von thermoplastischen Kunststoffen unter Verwendung von stärkehaltigen Materialien sowie damit hergestellter thermoplastischer Kunststoff**

(30) Priorität: 25.06.1998 DE 19828286
(71) Anmelder: supol GmbH, 39124 Magdeburg (DE)
(72) Erfinder: Mustroph, Gert Dr. rer. nat., 39108 Magdeburg (DE); Wagenhaus, Gerd Dipl.-Ing., 04509 Schönwolkau (DE); Witek, Wolfgang Dipl.-Ing., 39175 Gerwisch (DE); Höltmann, Wilhelm H. Dr. rer. nat., 21220 Seevetal (DE)
(74) Vertreter: Einsel, Martin, Dipl.-Phys.

(57) **Zusammenfassung**

Die Erfindung betrifft ein Verfahren zur Herstellung von thermoplastischen Kunststoffen unter Verwendung von stärkehaltigen Materialien. Als Ausgangsstoffe werden mindestens ein stärkehaltiges Material mit einem Anteil zwischen 20 und 70 Gewichtsprozent und ein polycarboxylfunktionalisiertes Pflanzenölharz mit einem Anteil zwischen 5 und 60 Gewichtsprozent gemischt. Diese Mischung wird unter Temperierung und Schereinwirkung in den thermoplastischen Kunststoff überführt.

## Beschreibung

Die Erfindung betrifft ein Verfahren zur Herstellung von thermoplastischen Kunststoffen unter Verwendung von stärkehaltigen Materialien. Sie betrifft ferner einen thermoplastischen Kunststoff und daraus hergestellte Formteile.

Thermoplastische Kunststoffe werden überwiegend aus petrochemischen Grundstoffen synthetisiert, so beispielsweise Polyolefine, Polyvinylchlorid, Polysterol, Polyester, Polyether, Polyurethane, Polyepoxide oder Polyamide. Seit einigen Jahren werden alternativ auch Kunststoffe aus nachwachsenden Rohstoffen vorgeschlagen. Das Interesse an diesen neuen Entwicklungen liegt einerseits in einem zunehmenden Umweltbewußtsein, andererseits besteht auch die Hoffnung, Produkte mit vorteilhaften Eigenschaften für spezielle Anwendungen zu erhalten. Auch die Frage der späteren Entsorgung der Kunststoffe und die erneuerbare Rohstoffquelle gewinnen zunehmend an Bedeutung. Als nachwachsende Rohstoffe kommen dabei z.B. Kohlenhydrate, wie Zucker, Cellulose, Stärke sowie Pflanzenproteine oder Pflanzenöle in Betracht.

Ein in Betracht kommender nachwachsender Rohstoff ist Stärke. Polymermaterialien mit oder aus Stärke sind aufgrund ihrer chemischen Struktur äußerst hydrophil. Die Überführung der nativen Stärken in destrukturierte oder thermoplastifizierte Stärken (TPS) ändert an der Feuchteempfindlichkeit grundlegend nichts. Dies steht einer Verwendung daraus erzeugter thermoplastischer Kunststoffe nachteilig entgegen. Um trotzdem vielleicht mit Stärke arbeiten zu können, werden zur Eingrenzung der Feuchteempfindlichkeit gegenwärtig im wesentlichen zwei Wege beschritten. Zum einen wird versucht, über Derivatisierungen zu thermoplastischen Stärkeestern oder Stärkeethern oder durch Zusatz von hydrophobierend wirkenden Polymeren das Problem zu lösen. Niedrig substituierte Stärkeester mit einem Substitutionsgrad (DS) unter 2 weisen jedoch keine befriedigende Feuchtebeständigkeit auf. Mit höheren Substitionsgraden wird das Polymer zwar deutlich feuchtstabiler, jedoch nimmt dafür die Sprödigkeit zu und es wird auch das vielfach erwünschte biologische Abbauvermögen signifikant gemindert, wie beispielsweise in der DE 43 26 118 A1, der DE 196 07 485 A1, der DE 195 29 410 A1 und der WO 96/20220 festgestellt wird.

Ein anderer Weg besteht in dem Zusatz von hydrophoben Polymeren. Auch dadurch kann die Feuchtebeständigkeit verbessert werden. Als hydrophobe Polymere werden dabei u.a. biologisch abbaubare Polymere vorgeschlagen, beispielsweise in der DE 42 37 535 A1, der EP 0 722 980 A1, der US-PS 5 656 682 und der EP 0 542 155 A1.

Es werden aber auch schwer abbaubare synthetische Produkte fossilen Ursprungs, wie Polyolefine, Polyamide oder Polyurethane u.a. eingesetzt. Bei einer derartigen, in der DE 41 21 111 A1 und der WO 96/17888 vorgeschlagenen Verwendung von relativ preiswerten synthetischen Polymeren, wie z.B. Polyolefinen, ist deren Anteil nur schwer biologisch abbaubar. Die wenigen biologisch abbaubaren hydrophoben Polymerwerkstoffe, die beispielsweise in der DE 42 37 535 A1 und der DE 42 00 485 A1 vorgeschlagen werden, sind gegenwärtig preislich so ungünstig, daß sich ihre Anwendung in größerem Umfang ausschließt.

Wie in der DE 42 37 535 A1 festgestellt wird, erfordert das Inkorporieren der hydrophoben Polymere in die hydrophile Stärkekomponente zusätzliche Phasenvermittler, um eine hinreichende zeitliche Stabilität der hergestellten Blends zu erreichen. Im Vergleich zu Kunststoffen aus den reinen Polyolefinen ist außerdem eine Eigenschaftsverschlechterung bezüglich Transparenz, Festigkeit, Verarbeitbarkeit, thermischer Zersetzung, Hydrophilie, Dimensionsstabilität und andere Eigenschaften zu verzeichnen.

Neben der Hydrophilie weisen stärkehaltige Kunststoffe auch eine erhebliche Sprödigkeit auf. Als Weichmacher werden daher konventionelle Produkte der Kunststoffindustrie, wie Phthalate, Adipate, Azalate, Citrate und Polyglycole in der DE 43 26 128 A1 und der DE 44 18 678 A1 vorgeschlagen, alternativ auch Weichmacher auf natürlicher Basis, wie Sorbitol, Glycerol, Sojaölepoxid oder Leinölepoxid. Dabei wird entweder in einem oder in mehreren Schritten thermoplastische Stärke unter Zusatz von bis zu 40 % Plastifizierungsmitteln hergestellt und anschließend mit bis zu 30 % hydrophoben Polymeren verknetet. Unter diesen Bedingungen sinkt dann allerdings der reale Anteil der Stärke vielfach auf unter 50 % der Kunststofformulierung, so daß sich diese Produkte nur noch bedingt als Stärkeprodukte ansehen lassen, die beispielsweise in der DE 44 43 539 A1 beschrieben werden.

Zusätzliche Vernetzungsmittel, wie Isocyanate oder Epoxide können die Festigkeit der stärkehaltigen Kunststoffe wesentlich erhöhen. Mit Hilfe von anorganischen Füllstoffen können die Zugfestigkeitswerte deutlich gesteigert werden, was in der DE 44 43 539 A1 vorgeschlagen wird, wobei der Anteil für kompostierbare Produkte jedoch limitiert ist.

Aufgabe der vorliegenden Erfindung ist es daher, ein Verfahren zur Herstellung von thermoplastischen Kunststoffen vorzuschlagen, das stärkehaltige Materialien verwendet und trotzdem die Nachteile der oben dargestellten Produkte möglichst verringert.

Diese Aufgabe wird dadurch gelöst, daß als Ausgangsstoffe mindestens ein stärkehaltiges Material mit einem Anteil zwischen 20 und 70 Gewichtsprozent und ein polycarboxylfunktionalisiertes Pflanzenölharz mit einem Anteil zwischen 5 und 60 Gewichtsprozent gemischt werden, und daß diese Mischung unter Temperierung und Schereinwirkung in den thermoplastischen Kunststoff überführt wird.

Es entsteht dadurch ein thermoplastischer Kombinationswerkstoff.

Als besonders bevorzugter Vorgang zur Einführung der Scherkräfte hat sich dabei ein Extrusionsvorgang erwiesen. Bei einem Extrusionsverfahren wirken sowohl Temperatur als auch mechanische Scherkräfte in das Material ein. Unter Einwirkung dieser Scherkräfte und der Temperatur erfolgt eine Thermoplastifizierung der stärkehaltigen Komponente.

Besonders bevorzugt ist es, wenn das polycarboxylfunktionalisierte Pflanzenölharz aus einem halbtrocknenden oder trocknenden Pflanzenöl oder Mischungen davon und einem ungesättigten Dicarbonsäureanhydrid hergestellt wird.

Native Pflanzenöle ohne eine Funktionalisierung ergeben keine chemische Reaktion mit den Stärkemolekülen. Erst durch die Einführung von Säureanhydridgruppen, bevorzugt über das Maleinsäureanhydrid, wird eine reaktive carboxylfunktionalisierte Ölkomponente erhalten.

Das erfindungsgemäße Verfahren wird bevorzugt bei einer Temperatur zwischen 120 °C und 250 °C, vorzugsweise zwischen 130 °C und 230 °C durchgeführt.

Werden den Ausgangsstoffen noch bestimmte Additive zugeführt, so können die angestrebten herzustellenden thermoplastischen Kunststoffe hinsichtlich ihrer Eigenschaften weiter optimiert werden. Als Additive kommen dabei beispielsweise Plastifikatoren, Farbstoffe, Gleitmittel, Vernetzungsmittel oder Streckmittel in Betracht, zu denen Einzelheiten in den Unteransprüchen genannt sind. Diese weiteren Additive sollten insgesamt Anteile von 40 Gewichtsprozenten nicht übersteigen.

Die erfindungsgemäß herstellbaren thermoplastischen Kombinationswerkstoffe wurden mit einem Zweiwellenextruder ZK50x15D (Hersteller Dr. Collin GmbH) entwickelt. Dabei wird eine stärkehaltige Komponente mit einem Pflanzenölharz zu thermoplastischen Kunststoffen umgesetzt. Die eingesetzten Pflanzenölharze werden nach einem in der DE 196 19 398 C2 vorgeschlagenen Verfahren durch Addition von Maleinsäureanhydrid an die Doppelbindungen von halbtrocknenden oder trocknenden Pflanzenölen, deren Gehalt an zweifach und dreifach ungesättigten Fettsäuren mindestens 50 % erreicht, synthetisiert. Als Pflanzenöle eignen sich besonders Leinöl, Drachenkopföl, Bohnenkrautöl, Perillaöl mit jeweils dominierenden Anteilen an Linolensäure und Safloröl, Mohnöl, Nachtkerzenöl oder Hanföl mit überwiegenden Anteilen an Linolsäure im Fettsäuremuster. Diese Öle können allein oder in Mischungen mit Maleinsäureanhydrid und Katalysatoren, wie Borsäure oder Sulfonsäuren, in Abhängigkeit des Maleinierungsgrades zu halbflüssigen bis festen Harzen umgesetzt werden. Weitgehend voll maleinierte Harze aus überwiegend Linolensäure enthaltenden Ölen, wie sie in DE 196 19 398 C2 beschrieben sind, werden nach Mahlung pulverförmig eingesetzt. Öle oder Ölmischungen mit einem geringeren Doppelbindungspotential oder untermaleinierte Harze, bei denen das verfügbare Doppelbindungspotential nur teilweise ausgenutzt wird, werden in flüssiger, bzw. verflüssigter Form appliziert. Die Applikation dieser Harze kann sowohl durch Vormischung mit der stärkehaltigen, ggf. mit weiteren Additiven angereicherten Komponente erfolgen, wobei der Harzanteil wegen beginnender Klebrigkeit der Mischung auf bis zu 20 % limitiert ist, als auch in separater Dosierung mit an sich bekannten Dosiereinrichtungen realisiert werden, wobei der Anteil der Harzkomponente am Gesamtrohstoffeinsatz 5-60 % beträgt.

Als stärkehaltige Komponente kann sowohl Weizenstärke, Kartoffelstärke oder Maisstärke allein oder in Mischung und/oder in Anteilen von 0-40 % der Stärkekomponente Weizenmehl und/oder Maismehl beigefügt werden. Als besonders vorteilhaft hat sich erwiesen, die stärkehaltige Komponente auf Restfeuchten unter 6 % vorzutrocknen, wobei für die Ausführung der erfindungsgemäßen Lehre ein Über- oder Unterschreiten der jeweiligen Verkleisterungstemperaturen der stärkehaltigen Komponente während des Trocknungsvorganges ohne wesentliche Bedeutung ist.

Es können weitere Additive zugesetzt werden. So hat sich als vorteilhaft erwiesen, der Ausgangsmischung Weichmacher natürlichen Ursprungs, wie Sorbitol, Glycerol und/oder Pflanzenölepoxide, wie Sojaölepoxid oder Leinölepoxid, in Anteilen von bis zu 35 % der Gesamtmischung zuzusetzen. Während halbflüssige Addukte der Pflanzenöle nicht zwingend eine weichmachende Komponente erfordern, ist besonders bei Verwendung pulverförmiger Pflanzenöladdukte ein entsprechender Zusatz vorteilhaft.

Für eine verbesserte Entformbarkeit von z.B. spritzgegossenen Formteilen hat sich als vorteilhaft erwiesen, der Rohstoffanmischung Calcium- und/oder Magnesiumstearat in Anteilen von bis zu 10 % der Rohstoffmischung beizufügen, wobei bei Verwendung von epoxidierten Pflanzenölen auch eine verbesserte Trennung beobachtet wird.

Überraschend wurde gefunden, daß bereits die mit den oben beschriebenen Komponenten erhältlichen Extrudate in Abhängigkeit des Maleinierungsgrades des eingesetzten Pflanzenölharzes eine zitronengelbe bis gelbbraune Farbe aufweisen, opak bis durchscheinend sind, sich von den Werkstoffeigenschaften her bereits für weniger anspruchsvolle Anwendungen eignen und insbesondere bei Verwendung untermaleinierter Harze eine gute Wasserbeständigkeit aufweisen.

Durch Zusatz von anorganischen Füllstoffen, wie Siliziumdioxid (z.B. Wessalith® der DEGUSSA AG), Kieselsäure, Kaolin, Calciumcarbonat oder Graphit in Anteilen von bis zu 5 %, ist eine erhebliche Anhebung der mechanischen Eigenschaften erreichbar, wobei insbesondere Calciumcarbonat zu einer merklichen Farbaufhellung beiträgt, Siliziumdioxid und Kieselsäure überraschenderweise die Flexibilität des Extrudats erhöhen.

Für weitergehend anspruchsvollere Anwendungen können den Rohstoffen zusätzlich Isocyanate, insbesondere ein polymeres Diphenylmethan-4,4'-diisocyanat (z.B. Desmodur® 1520 A20 der BAYER AG) als Vernetzungsmittel beigefügt werden, die insbesondere die Elastizitätsmodule der Extrudate signifikant erhöhen, jedoch auch zu einer Farbverdunkelung führen.

Weitere bei der Kunststoffherstellung übliche Additive, wie vor allem organische oder anorganische Farbstoffe, können mit üblichen Techniken der Rohmischung oder auch dem Extrudat zugesetzt werden, ohne daß nachteilige Wirkungen auf die mechanischen Eigenschaften der Extrudate erkennbar sind.

Für eine spätere Entsorgung über biologischen Abbau ist es zu bevorzugen, wenn die diskutierten anorganischen Zusatzstoffe in ihrer Summe nicht über 40 % der Gesamtmasse hinausgehen.

Die vorstehend dargestellten Komponenten werden vor der Extrusion mechanisch vermischt, wobei die flüssigen, halbflüssigen oder bis 80 °C verflüssigbaren Komponenten ganz oder teilweise, einzeln oder vorvermischt, mit den pulverförmigen Bestandteilen vermischt oder ganz oder teilweise, einzeln oder vorvermischt, separat in den Extruder mittels üblicher und bekannter Einrichtungen und Verfahren dosiert werden können. Die Verarbeitung der Rohstoffe erfolgt im Extruder, wobei nicht nur eine Plastifizierung der Stärkekomponente, sondern auch eine Veresterung mit der Pflanzenölkomponente zu Halbestern eintritt.

Die Verwendung von maleinierten Pflanzenölen zur Herstellung von thermoplastischen Stärkeestern weist gegenüber den konventionellen Verfahren zur Darstellung entsprechender Ester von organischen Säuren eine Reihe von Vorteilen auf. So gelingt die Plastifizierung und Veresterung in einem Verfahrensschritt, ohne daß es zusätzlicher Katalysatoren, Lösungsmittel oder Halogenverbindungen bedarf. Die Pflanzenölkomponente weist auch bei Verarbeitungstemperaturen von über 200 °C einen äußerst geringen Dampfdruck auf, der Umweltbelastungen durch merkliche Entgasungen während der Verarbeitung weitgehend ausschließt. Im Gegensatz zu Stärkeacetaten, die erst bei Substitutionsgraden DS > 2 hinreichende Feuchtebeständigkeit erreichen, ist das erfindungsgemäße Extrudat bereits ab DS > 0,1 für normal beanspruchte Anwendungen ausreichend hydrophob. Dennoch kann sich eine weitergehende Hydrophobierung notwendig machen. Diese kann unproblematisch durch Zusatz bekannt hydrophober Polymerer, wie Polymilchsäure (PLA), Polycaprolacton, Cellulosediacetat, Polyhydroxybuttersäure/ Hydroxyvaleriansäure-Copolymere oder Polyhydroxybuttersäure, sowohl vor der Extrusion als auch als Granulatzusatz vor der Verarbeitung zu z.B. Spritzgußteilen erfolgen. Die Kompatibilität mit den erfindungsgemäßen thermoplastischen Kombinationswerkstoffen ist gegeben, ohne daß weitere Phasenvermittler zugesetzt werden müssen.

Die entstehenden Kunststoffe können auf konventionellen Kunststoffverarbeitungsanlagen weiterverarbeitet werden.

Zusammengefaßt schlägt die Erfindung ein Verfahren zur Herstellung von thermoplastischen Kombinationswerkstoffen aus stärkehaltigen Materialien, vorzugsweise Weizen- und Kartoffelstärke sowie Weizenmehl, und mit Maleinsäureanhydrid polycarboxylfunktionalisierten Pflanzenölen vor. Die Komponenten werden ggf. unter Zusatz weiterer Additive von im wesentlichen natürlichen Ursprungs, wie Weichmacher, Farbstoffe, Gleitmittel, Füllstoffe und/oder Vernetzungsmittel, gemeinsam extrudiert.

Die Extrudate sind geeignet für eine Verwendung zur Herstellung insbesondere von Spritzguß-, Extrusions-, Blasform- oder Tiefziehteilen.

Die Erfindung sei an folgenden Ausführungsbeispielen näher erläutert, die jedoch keine Einschränkung des erfinderischen Gedankens darstellen. Zur Unterscheidung verschiedener Begriffe ist in den Ansprüchen und der Beschreibung bei den Anteilen des stärkehaltigen Materials und der polycarboxylfunktionalisierten Pflanzenölharze von Gewichtsprozenten an der Gesamtansatzmischung gesprochen worden. Im folgenden bedeutet die Angabe 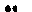 Teile" den Anteil eines bestimmten Produkts, beispielsweise von Mehl, jeweils an der Gesamtmenge des stärkehaltigen Materials, also nicht an der Gesamtmenge der Ausgangsstoffe.

In den Beispielen A1, A2 und A3 wird zunächst die Herstellung von möglichen carboxylfunktionalisierten Pflanzenölharzen beschrieben, die dann anschließend in den Beispielen B1, B2, B3, B4 und B5 zu den angestrebten thermoplastischen Kunststoffen umgesetzt werden. Es entstehen so Kombinationswerkstoffe.

### Beispiel A1

900 Tle. Leinöl mit einem Linolensäuregehalt von 60,9 % der Gesamtfettsäuren werden mit 660 Tln. Maleinsäureanhydrid (MSA) und 36 Tln. Borsäure in einem 2-l-Dreihalskolben unter Rühren erhitzt. Nach Überschreiten einer Temperatur von 200 °C, wird die Reaktion noch 2,5-3,5 h bei Temperaturen von 220-240 °C weitergeführt. Nach Abbruch der Umsetzung wird das Harz im erwärmten Zustand aus dem Kolben entfernt und auf Raumtemperatur abgekühlt. Anschließend wird das Harz zu einem gelblich-braunen Pulver gemahlen.

### Beispiel A2

900 Tle. Drachenkopföl mit einem Linolensäuregehalt von 63,8 % der Gesamtfettsäuren werden mit 300 Tln. Maleinsäureanhydrid (MSA) und 24 Tln. Borsäure entsprechend Beispiel A1 in einem 2-l-Dreihalskolben unter Rühren erhitzt. Nachdem die Temperatur 200 °C überschritten hat, wird die Reaktion noch 2-3 h bei Temperaturen von 220-240 °C weitergeführt. Nach Abbruch der Reaktion wird das entstandene Harz auf ca. 50-90 °C abgekühlt.

### Beispiel A3

900 Tle. Leinöl mit einem Linolensäuregehalt von 60,9 % der Gesamtfettsäuren werden gemäß Beispiel A1 mit 300 Tln. Maleinsäureanhydrid (MSA) und 24 Tln. Borsäure in einem 2-l-Dreihalskolben unter Rühren erhitzt. Nachdem die Temperatur 200 °C überschritten hat, wird die Reaktion noch 2-3 h bei Temperaturen von 220-240 °C weitergeführt. Nach Abbruch der Reaktion wird das entstandene Harz auf ca. 50-90 °C abgekühlt.

### Beispiel B1

1000 Tle. auf 1,5 % Restfeuchte vorgetrocknete Weizenstärke werden mit 600 Tln. Pflanzenölharz nach Beispiel A1 und 800 Tln. Sorbitol mechanisch vorvermischt und im Zweiwellenextruder bei Temperaturen von 180-230 °C zu einem durchscheinenden, rötlich-braunen Werkstoff umgesetzt, der thermoplastisch verarbeitbar ist.

### Beispiel B2

1000 Tle. auf 1,5 % Restfeuchte vorgetrocknete Weizenstärke werden mit einem Durchsatz von 2 kg/h in den Zweiwellenextruder dosiert. 800 Tln. Pflanzenölharz nach Beispiel A2 werden mittels Dosierpumpe separat mit einem Durchsatz von 1,6 kg/h in die Einzugszone des Extruders dosiert und bei Temperaturen von 145-230 °C zu einem durchscheinenden, zitronengelben Werkstoff umgesetzt. Der entstandene Werkstoff ist weitgehend hydrophob, dehnbar und thermoplastisch verarbeitbar.

### Beispiel B3

900 Tle. Weizenstärke und 100 Tle. Weizenmehl werden auf 1,5 % Restleuchte vorgetrocknet und mit einem Durchsatz von 2 kg/h in den Zweiwellenextruder dosiert. 800 Tln. Pflanzenölharz nach Beispiel A2 werden mittels Dosierpumpe separat mit einem Durchsatz von 1,6 kg/h in die Einzugszone des Extruders dosiert und bei Temperaturen von 145-230 °C zu einem durchscheinenden, sandfarbenen Werkstoff umgesetzt. Der entstandene Werkstoff ist weitgehend hydrophob, dehnbar und thermoplastisch verarbeitbar.

### Beispiel B4

1000 Tle. auf 1,5 % Restfeuchte vorgetrocknete Weizenstärke werden mit 25 Tln. feinkörnigem Siliziumdioxid, 25 Tln. Calciumcarbonat, 50 Tln. Calciumstearat und 20 Tln. eines polymeren Diphenylmethan-4,4'-diisocyanats mechanisch vorgemischt und mit einem Durchsatz von 2 kg/h in den Zweiwellenextruder dosiert. 800 Tln. Pflanzenölharz nach Beispiel A3 und 150 Tle. Sojaölepoxid werden jeweils separat mittels Dosierpumpen mit einem Durchsatz von 1,6 kg/h, bzw. 0,3 kg/h in die Knetzone des Extruders dosiert und bei Temperaturen von 145-230 °C zu einem dunkelgelben Werkstoff umgesetzt. Der entstandene Werkstoff ist weitgehend hydrophob, mechanisch stark belastbar, dehnbar und thermoplastisch verarbeitbar.

### Beispiel B5

1000 Tle. auf 1,5 % Restfeuchte vorgetrocknete Weizenstärke werden mit 0,6 Tln. eines grünen anorganischen Farbstoffes vermischt bei einem Durchsatz von 2 kg/h in den Zweiwellenextruder dosiert. 800 Tln. Pflanzenölharz nach Beispiel A3 werden mittels Dosierpumpe separat mit einem Durchsatz von 1,6 kg/h in die Einzugszone des Extruders dosiert und bei Temperaturen von 145-230 °C zu einem durchscheinenden hellgrünen Werkstoff umgesetzt. Der entstandene Werkstoff ist weitgehend hydrophob, dehnbar und thermoplastisch sehr gut verarbeitbar.

## Patentansprüche

1. Verfahren zur Herstellung von thermoplastischen Kunststoffen unter Verwendung von stärkehaltigen Materialien,
**dadurch gekennzeichnet,**
**daß** als Ausgangsstoffe mindestens ein stärkehaltiges Material mit einem Anteil zwischen 20 und 70 Gewichtsprozent und ein polycarboxylfunktionalisiertes Pflanzenölharz mit einem Anteil zwischen 5 und 60 Gewichtsprozent gemischt werden, und daß diese Mischung unter Temperierung und Schereinwirkung in den thermoplastischen Kunststoff überführt wird.

2. Verfahren nach Anspruch 1,
**dadurch gekennzeichnet,**
**daß** das stärkehaltige Material Weizenstärke und/oder Kartoffelstärke und/oder Maisstärke enthält.

3. Verfahren nach Anspruch 2,
**dadurch gekennzeichnet,**
**daß** das stärkehaltige Material außerdem Weizenmehl und/oder Maismehl enthält, wobei der Anteil der stärkehaltigen Mehlkomponente an dem stärkehaltigen Material weniger als 40 von 100 Teilen des stärkehaltigen Materials beträgt.

4. Verfahren nach einem der vorstehenden Ansprüche,
**dadurch gekennzeichnet,**
**daß** das stärkehaltige Material auf Restfeuchten von unter 6 % , vorzugsweise von unter 3 %, vorgetrocknet wird.

5. Verfahren nach einem der vorstehenden Ansprüche,
**dadurch gekennzeichnet,**
**daß** das polycarboxylfunktionalisierte Pflanzenölharz zuvor in einer Additionsreaktion aus halbtrocknenden oder trocknenden Pflanzenölen mit Maleinsäureanhydrid gewonnen wird.

6. Verfahren nach einem der vorstehenden Ansprüche,
**dadurch gekennzeichnet,**
**daß** den Ausgangsstoffen zusätzlich Calciumstearat und/oder Magnesiumstearat und/oder ein nicht notwendig polycarboxylfunktionalisiertes Pflanzenöl als Gleitmittel mit einem Anteil von bis zu 10 % zugesetzt werden.

7. Verfahren nach einem der vorstehenden Ansprüche,
**dadurch gekennzeichnet,**
**daß** den Ausgangsstoffen anorganische und/oder organische Farbstoffe in Anteilen von 0 bis 2 %, vorzugsweise 0,02 bis 0,5 %, zugesetzt werden.

8. Verfahren nach einem der vorstehenden Ansprüche,
**dadurch gekennzeichnet,**
**daß** den Ausgangsstoffen ein Weichmacher mit einem Anteil von 0 bis 35 % zugesetzt wird.

9. Verfahren nach Anspruch 8,
**dadurch gekennzeichnet,**
**daß** als Weichmacher Sorbitol und/oder Glycerol und/oder Pflanzenölepoxide, insbesondere Sojaölepoxid oder Leinölepoxid, eingesetzt werden.

10. Verfahren nach einem der vorstehenden Ansprüche,
**dadurch gekennzeichnet,**
**daß** den Ausgangsstoffen 0 bis 30 % anorganische Füllstoffe zugesetzt werden.

11. Verfahren nach Anspruch 10,
**dadurch gekennzeichnet,**
**daß** als Füllstoffe Kieselsäure und/oder Siliziumdioxid und/oder Calciumcarbonat und/oder Graphit und/oder Kaolin eingesetzt werden.

12. Verfahren nach einem der vorstehenden Ansprüche,
**dadurch gekennzeichnet,**
**daß** man den Ausgangsstoffen als zusätzliche Vernetzungsmittel Polyisocyanate, insbesondere polymeres Diphenylmethan-4,4'-diisocyanat, in Anteilen von 0 bis 4 % zusetzt.

13. Verfahren nach einem der vorstehenden Ansprüche,
**dadurch gekennzeichnet,**
**daß** feste und pulverförmige Ausgangsstoffe vorvermischt werden.

14. Verfahren nach einem der vorstehenden Ansprüche,
**dadurch gekennzeichnet,**
**daß** flüssige, halbflüssige oder bis 80 °C verflüssigbare Komponenten ganz oder teilweise, einzeln oder vorvermischt, mit den pulverförmigen Bestandteilen vermischt oder ganz oder teilweise, einzeln oder vorvermischt, separat dosiert werden.

15. Verfahren nach einem der vorstehenden Ansprüche,
**dadurch gekennzeichnet,**
**daß** das stärkehaltige Material und das polycarboxylfunktionalisierte Pflanzenölharz zusammen mindestens 60 % der Ausgangsmischung ausmachen.

16. Verfahren nach einem der vorstehenden Ansprüche,
**dadurch gekennzeichnet,**
**daß** die Mischung extrudiert wird.

17. Verfahren nach einem der vorstehenden Ansprüche,
**dadurch gekennzeichnet,**
**daß** der Extrusionsvorgang mit einer Temperatur zwischen 120 °C und 250 C°, vorzugsweise mit 130 °C bis 230 °C, erfolgt.

18. Thermoplastischer Kunststoff, hergestellt nach einem der vorstehenden Ansprüche.

19. Formteil, hergestellt aus einem thermoplastischen Kunststoff nach Anspruch 18.
